# EUROPEAN PATENT APPLICATION

(11) **EP 4 579 490 A1**
(43) Date of publication of application: **02.07.2025**
(21) Application number: 23873121.0
(22) Date of filing: 26.09.2023
(51) Int. Cl.: G06F 16/958, G06F 16/9032, G06F 16/9038, G06F 16/904, G06F 16/532, G06F 16/538, G06F 16/432, G06F 40/268, G06F 40/284, G06F 40/166

(54) **USER EXPERIENCE-BASED CONTENT GENERATING PLATFORM SERVER AND PLATFORM PROVIDING METHOD**

(30) Priority: 30.09.2022 KR 20220125347
(71) Applicant: LG Management Development Institute Co., Ltd., Seoul 07336 (KR)
(72) Inventor: CHOI, Ji Hoon, Seoul 07796 (KR); KWON, Joa Kun, Seoul 07796 (KR)
(74) Representative: BCKIP Part mbB
(86) International application number: PCT/KR2023/014847
(87) International publication number: WO 2024/072008

(57) **Abstract**

The present disclosure aims to provide a process in which images having maximum creativity are generated through a learning model generating the images, based on a text, in a direction desired by a user by repeating a process for forming an archive reflecting a user's own concept, based on the user's experiences and thoughts.

## Description

### [TECHNICAL FIELD]

The present disclosure relates to a user experience-based content generation platform server and a platform providing method.

### [BACKGROUND ART]

Currently, in an environment where various types of content are provided, creative content generated by users does not mean that something new are generated from nothing which does not exist before, but means that something new are generated by reflecting personal inclinations such as experiences, thoughts, and preferences of the users, on existing content.

Specifically, the creative content is generated by connecting existing content in various ways. For this purpose, AI-based content generation methods have been proposed.

However, in learning for AI-based content generation, unrefined languages may be input during the learning, or information different from needs of the users may be input. Consequently, there are difficulties in outputting creative content intended by the users.

### [DETAILED DESCRIPTION OF INVENTION]

### [TECHNICAL PROBLEMS]

Embodiments disclosed in the present disclosure aim to provide a user experience-based content generation platform server and a platform providing method for providing content having maximized creativity while a user's own concept is formed, based on the user's experiences and thoughts.

Aspects to be achieved by the present disclosure are not limited to aspects described above, and other aspects not described herein will be clearly understood by those skilled in the art, from the description below.

### [TECHNICAL SOLUTION]

According to an embodiment in the present disclosure, there is provided a content generation platform server including a memory including a first learning model trained to generate a reconstructed content, based on a text, and a processor communicating with the memory and controlling the first learning model to output at least one reconstructed content corresponding to the text when the text is input from a user terminal. The processor receives an input content and a first text matching the input content from the user terminal, generates a bag of words, based on the first text, determines caption data by using a second text determined based on the first text included in the bag of words and a predetermined sentence structure, inputs a sentence indicated by the caption data to the first learning model, generates at least one reconstructed content corresponding to the sentence, connects the at least one reconstructed content and the input content, and outputs the at least one reconstructed content and the input content to the user terminal.

In this case, the memory may include a second learning model that outputs at least one text indicating an input image, and in a case where the input content is the input image, when receiving the first text matching the input content, the processor may generate a recommended text including a sentence or a word including an object, an appearance, and a background through captioning of the input image using the second learning model, may provide the generated recommended text to the user terminal, and may receive at least one final text determined or corrected by the user, based on the recommended text, as the first text.

In addition, in a case where the input content is the input image, the processor may provide the user terminal with a process for generating the caption data including a predetermined sentence structure forming the caption data and a word category for each item forming the sentence structure, the word category for each item may include at least one blank filled by settings of the user, and a connecting word may be formed between the blanks of the word category for each item.

In addition, the processor may provide the user terminal with a recommended word to be input to each of the plurality of blanks, and may provide the recommended word by considering a relationship with the input image and whether the recommended word coincides with the word category.

In addition, in a case where the reconstructed content is a reconstructed image, the processor may receive a feedback for the reconstructed image selected by the user from the at least one reconstructed image, from the user terminal, may additionally generate the second text of the bag of words, based on the feedback, and may reconstruct a sentence of the caption data, based on the feedback.

In addition, the processor additionally may generate the second text for at least one word category of the bag of words, based on the feedback.

In addition, when receiving the feedback from the user terminal, the processor may provide a user interface to the user terminal to receive a feedback opinion for the reconstructed image and a pinpoint in the reconstructed image matching the feedback opinion in accordance with an operation of the user.

In addition, the memory may include a third learning model which is a morphological analyzer trained to preprocess the text and to separate the text into a morpheme, and after receiving the feedback, the processor may input the reconstructed image to the third learning model to determine a common morpheme token related to the reconstructed image, may reconstruct a sentence of the caption data by using the determined common morpheme token, and may provides the reconstructed sentence to the user terminal.

In addition, the user terminal may correct the reconstructed sentence in accordance with an operation of the user, and may transmit the finally determined reconstructed sentence to the content generation platform server, and when receiving the finally determined reconstructed sentence, the processor may input the finally determined reconstructed sentence to the first learning model, may re-output the reconstructed image, and may provide the reconstructed image to the user terminal.

In addition, the processor may generate an archive of each of the reconstructed images generated as the reconstructed image is initially generated and the feedback is repeatedly performed.

In addition, the processor may search for real images having a similarity level higher than a preset reference value, based on at least one of the reconstructed images, and may provide the real images to the user terminal.

In addition, the processor may extract caption data including a sentence or a word through captioning of each of the at least one reconstructed image, may compare the extracted caption data with the real images, and may recommend new caption data.

According to an embodiment in the present disclosure, there is provided a content generation flatform providing method, as a method in which a processor of a user terminal generates user experience-based content in conjunction with a content generation platform server including at least one learning model. The method includes a step of determining an input image and a first text for the input image in response to an input of a user, a step of performing image captioning on the input image and providing a recommended text including a sentence or a word for at least one category of an object, an appearances, or a background, a step of additionally determining the first text for the input image in response to a user input for the recommended text, a step of generating a bag of words, based on the determined first text, a step of providing the user with a process for setting caption data, based on the bag of words, a step of determining a second text of the caption data in accordance with an input of the user, and setting the caption data in accordance with the determined second text and a predetermined sentence structure, and a step of inputting a sentence indicated by the set caption data, generating a reconstructed image through at least one learning model, and outputting the generated reconstructed image.

In this case, the step of providing the user with the process for setting the caption data, based on the bag of words, may include a step of outputting a process for generating the caption data including the predetermined sentence structure forming the caption data and a word category of each item forming the sentence structure.

In addition, the word category of each item of the process for generating the caption data may include at least one blank filled by settings of the user, and a connecting word may be formed between the blanks of the word category of each item.

In addition, the content generation flatform providing method may further include a step of receiving a feedback for the reconstructed image selected by the user from the at least one reconstructed image output from the user, and a step of reconstructing a sentence of the caption data, based on the feedback.

In addition, the step of receiving the feedback for the reconstructed image may include a step of receiving a feedback opinion for the reconstructed image and a pinpoint in the reconstructed image matching the feedback opinion in accordance with an operation of the user.

In addition, the step of reconstructing the sentence of the caption data, based on the feedback, may include a step of inputting the reconstructed image to a third learning model to determine a common morpheme token related to the reconstructed image, and reconstructing the sentence of the caption data by using the determined common morpheme token to provide the reconstructed sentence to the user terminal.

In addition, the step of reconstructing the sentence of the caption data, based on the feedback, may include a step of additionally generating and providing the second text for at least one word category of the bag of words, based on the feedback.

### [EFFECT OF INVENTION]

According to the above-described technical solution in the present disclosure, an archive reflecting a user's own concept can be formed, based on the user's experiences and thoughts, and an image having maximized creativity can be provided by using the archive.

According to the above-described technical solution in the present disclosure, a learning model is trained by using a text and a predetermined sentence structure in a bag of words. Therefore, an image that matches the user's intention can be generated.

Advantageous effects in the present disclosure are not limited to the advantageous effects described above, and other advantageous effects not described herein will be clearly understood by those skilled in the art, from the description below.

### [BRIEF DESCRIPTION OF THE DRAWING]

FIG. 1 is a block diagram of a content generation platform server in the present disclosure.
FIGS. 2 to 29 are exemplary views for describing a content generation method in the present disclosure.

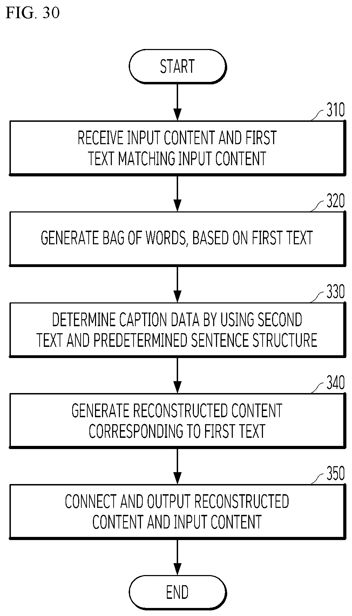

FIG. 30 is a flowchart for describing a platform providing method in the present disclosure.

### [BEST MODE FOR CARRYING OUT THE INVENTION]

Throughout the present specification, when it is described that a certain component is "connected" to another component, this description includes not only direct connection but also indirect connection, and the indirect connection includes connection via a wireless communication network.

In addition, when it is described that a certain component "includes" another component, this description does not mean that the certain component exclude other components, but means that the certain component may include other components, unless otherwise specifically described.

Throughout the present specification, when it is described that a certain member is located "on" another member, this description includes not only a case where the certain member is in contact with another member, but also a case where still another member exists between the two members.

The terms of first, second, and the like are used to distinguish one component from another component, and the components are not limited by the above-described terms.

Singular expressions include plural expressions unless the context clearly indicates otherwise.

Identification codes in each step are used for convenience of description, and are not used to describe the order of each step. Each step may be performed in the order different from a specified order unless the context clearly indicates the specific order.

Hereinafter, operating principles and embodiments in the present disclosure will be described with reference to the accompanying drawings.

In the present specification, a 'content generation platform server according to the present disclosure' includes various devices which can perform computational processing to provide a user with results. For example, the content generation platform server according to the present disclosure may include all of a computer, a server device, and a portable terminal, or may be provided in any form of these.

Here, for example, the computer may include a notebook, a desktop, a laptop, a tablet PC, a slate PC, or the like equipped with a web browser.

The server device is a server that processes information by communicating with an external device, and may include an application server, a computing server, a database server, a file server, a game server, a mail server, a proxy server, a web server, and the like.

For example, the portable terminal may include all types of handheld wireless communication devices such as a Personal Communication System (PCS), a Global System for Mobile communications (GSM), Personal Digital Cellular (PDC), Personal Handyphone System (PHS), Personal Digital Assistant (PDA), International Mobile Telecommunication (IMT)-2000, Code Division Multiple Access (CDMA)-2000, W-Code Division Multiple Access (W-CDMA), and Wireless Broadband Internet (Wibro) terminals, or smart phones, and wearable devices such as a watches, rings, bracelets, anklets, necklaces, glasses, contact lenses, or head-mounted devices (HMD).

A user experience-based content generation platform may include a content generation platform server and a terminal (not illustrated) that generates user experience-based content in response to a user input.

In an embodiment, when a terminal generating the content may generate the user experience-based content through the following process. The terminal activates a content generation program to communicate with the content generation platform server, and transmits data in accordance with the user input. The content generation platform server analyzes the transmitted data to generate the content, based on a learning model. Thereafter, the content generation platform server transmits the content to the terminal again.

In another embodiment, a terminal generating the content may generate the user experience-based content through the following process. The terminal performs the user input and some data processing, transmits an analysis using the learning model to the content generation platform server to perform the analysis, receives data output from the learning model, and provides the data to the user.

In still another embodiment, a terminal generating the content may perform a user experience-based content generation method through the following process. The terminal receives a content generation program including the learning model from the content generation platform server, and thereafter executes the received content generation program to analyze data directly input by a user.

Hereinafter, a user experience-based content generation method will be described in which the terminal generating the content receives the user input and receives the data analyzed by the learning model from the content generation platform server. According to another embodiment, as a matter of course, a content generation process in which a partial process of the content generation method described as being performed by a content generation terminal (hereinafter, referred to as a content generation platform server) is also included in the embodiment in the present disclosure. Here, the terminal may include the computer, the portable terminal, and the like as described above.

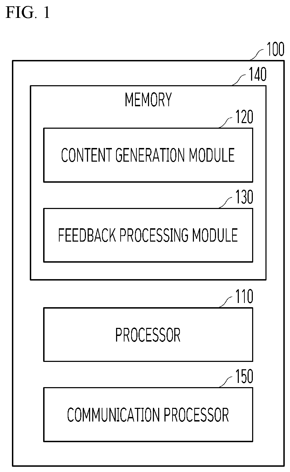

FIG. 1 is a block diagram of the content generation platform server in the present disclosure.

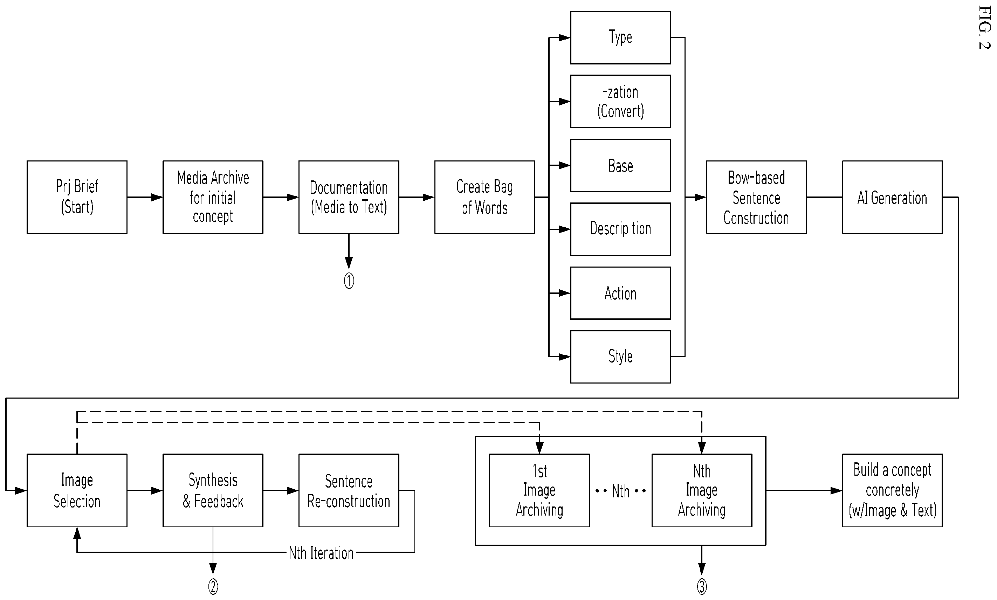

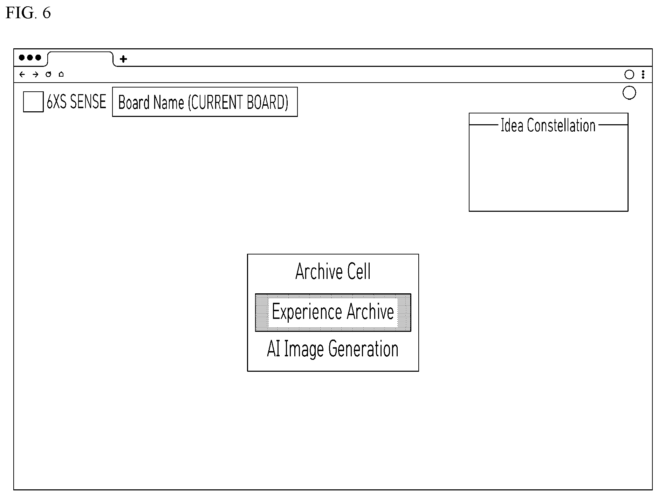

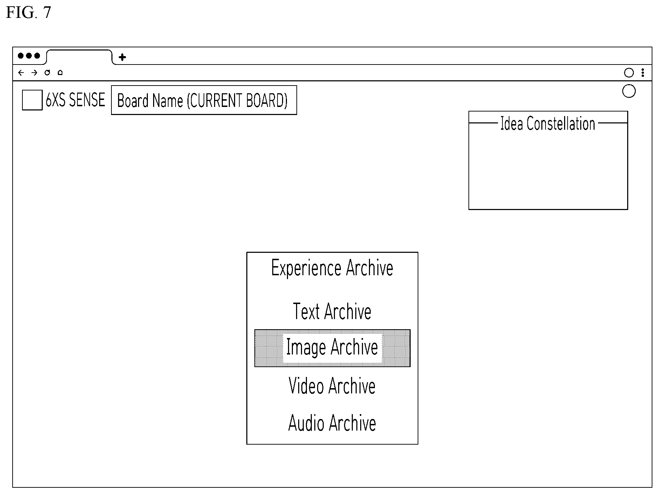

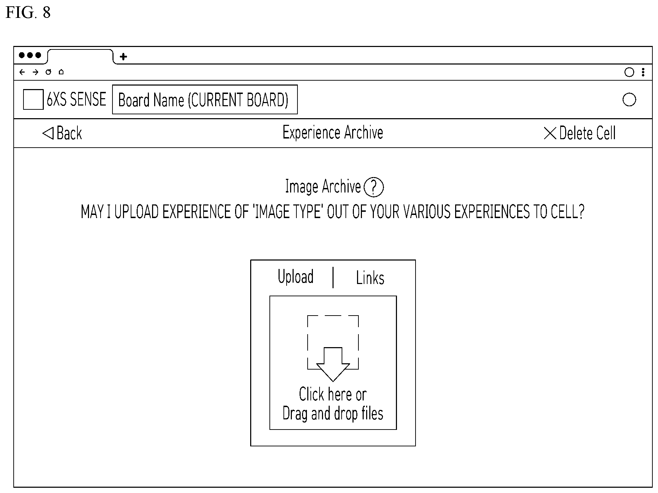

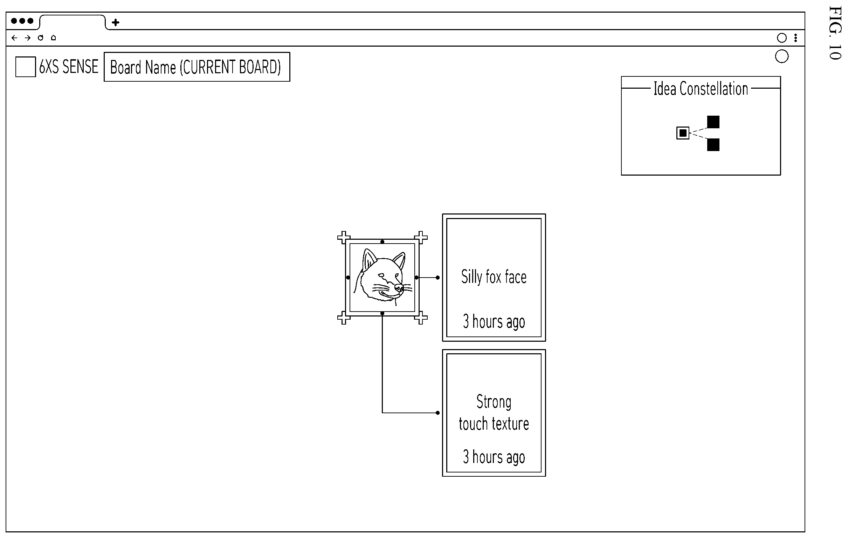

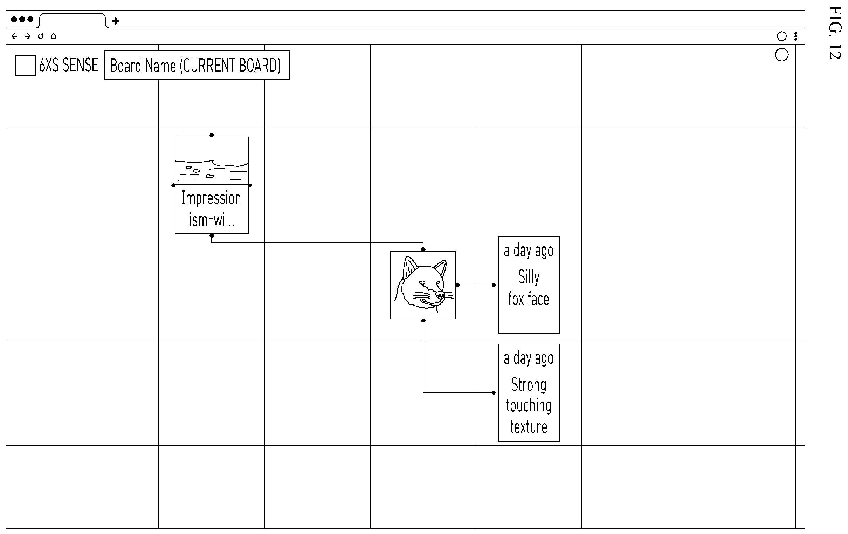

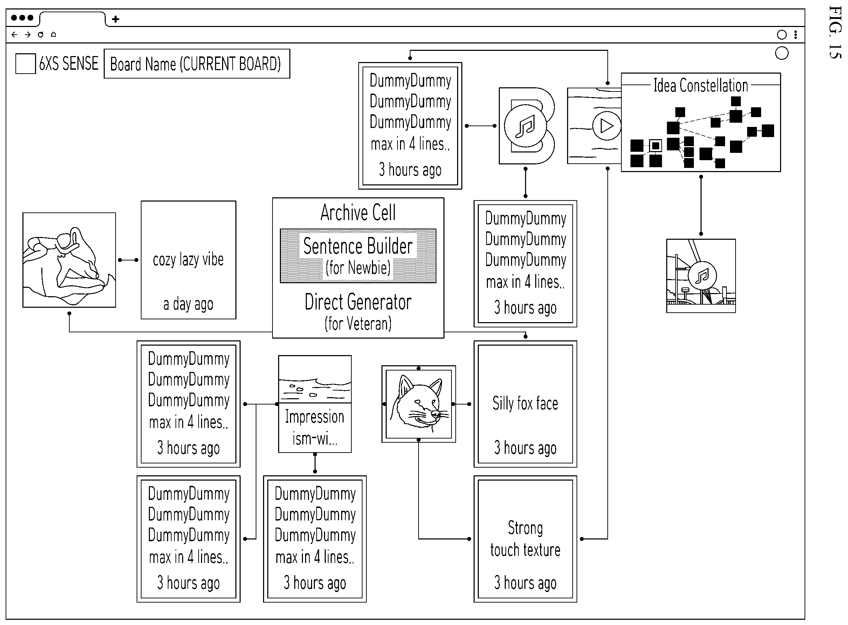

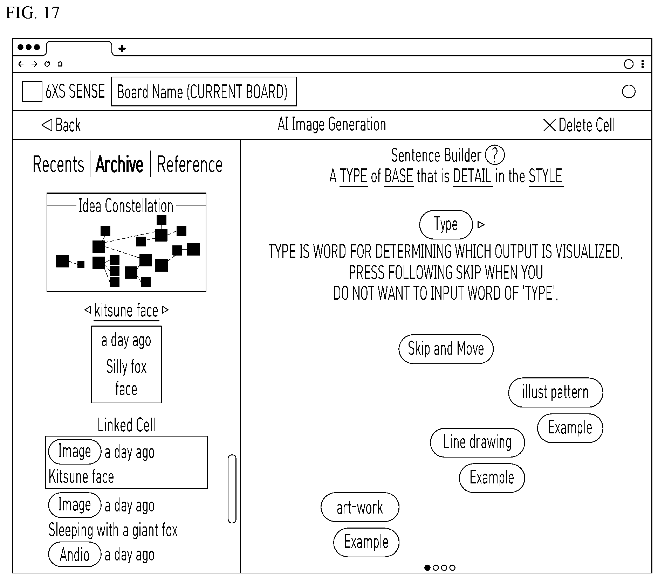

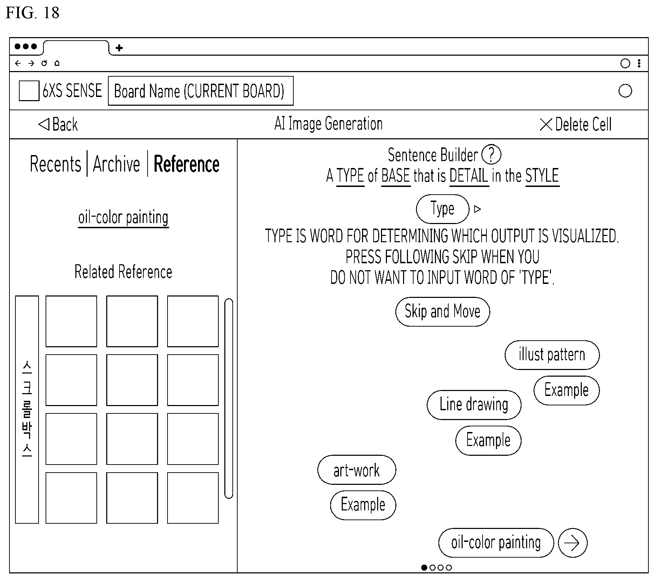

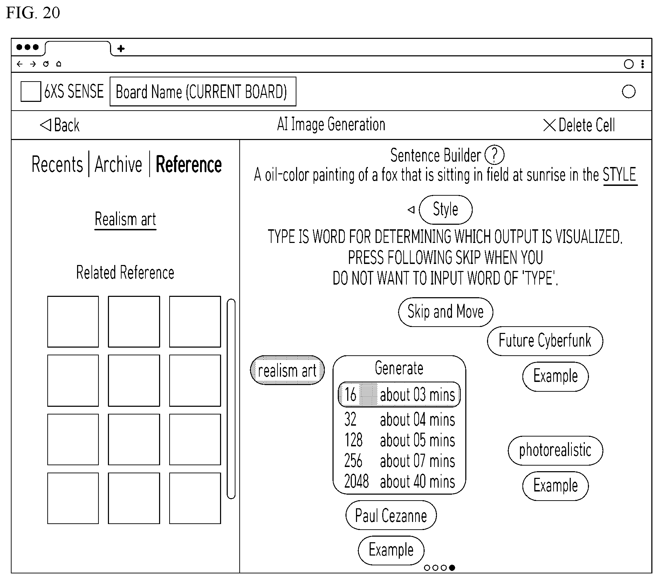

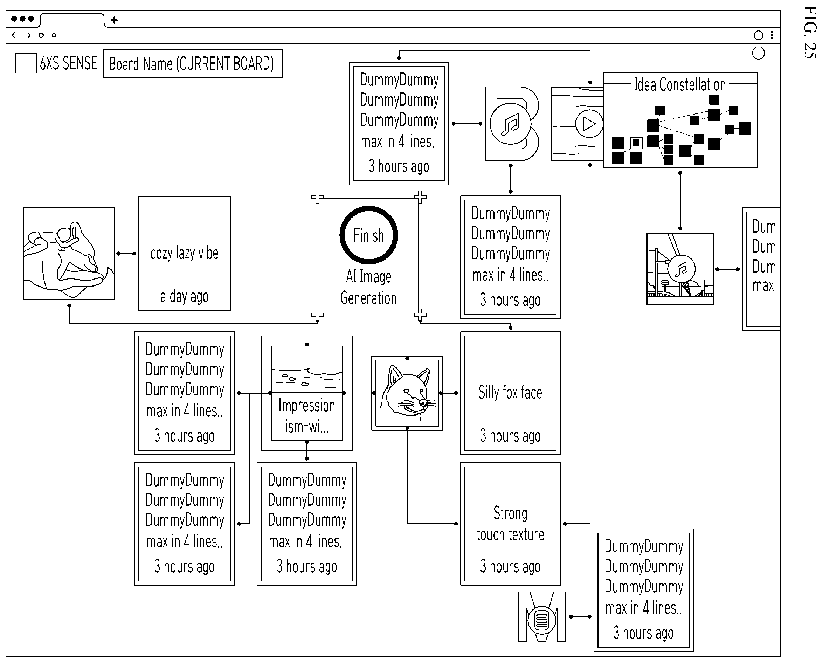

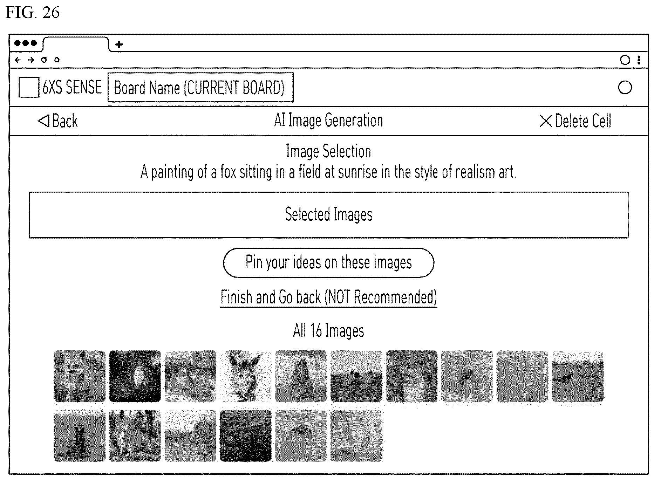

Hereinafter, the content generation method in the present disclosure will be described with reference to FIGS. 2 to 29 which are exemplary diagrams for describing the content generation method.

Referring to FIG. 1, a content generation platform server 100 includes a processor 110, a memory 140, and a communication processor 150. In this case, the processor 110 may perform the content generation method by executing a content generation program for generating the content, based on a text. This content generation program includes a content generation module 120 and a feedback processing module 130, which are executed by the processor 110. The content generation module 120 and the feedback processing module 130 may control an operation of each configuration. Components illustrated in FIG. 1 are not essential for implementing the content generation platform server 100 according to the present disclosure, and thus, the content generation platform server 100 described in the present specification may have more or fewer components than the components listed above.

The processor 110 may communicate with the memory 140, and the content generation program may include a first learning model trained to output at least one reconstructed content corresponding to a text based on a user input when receiving the text from a terminal.

Meanwhile, a user may have a difficulty in preparing the text for generating a reconstructed content desired by the user in the first learning model, and may have a difficulty in finding solutions when the reconstructed content is not generated in a desired direction.

The present disclosure aims to provide a user experience-based content generation method through a process of generating the content or by archiving a process in which the user directly inputs the content and the text matching the content, and assisting the user to compose the text, based on this archive.

For this purpose, the processor 110 may receive input content and the first text matching the input content from the user.

Here, as the input content and the first text, the user may directly select the input content in any way through an archive input, and the first text matching the selected input content may be directly input (typewritten).

In addition, the first text may be a text by the user input to the first learning model to obtain an initial concept of the reconstructed content to be generated, and the reconstructed content generated based on this text may be the input content. That is, the user may input the first text to the first learning model for the initial concept, and may set the generated reconstructed content as the input content.

Hereinafter, a case where the input content is an input image and the reconstructed content is a reconstructed image will be described as an example.

The first text described above may include a personal reason and an opinion which relate to the input image. Without being limited thereto, any information that may reflect experiences of the user may be used. For example, when the input image is a fox image, the processor 110 may register a silly fox face and a strong touching texture which relate to the fox image input by the user, as the first text. In this way, the first text is not used to simply describe a subject of the input image, but may include various opinions such as a drawing style of the input image.

The processor 110 may receive the input content and the first text through an operation of the user to generate the archive for setting an initial concept reflecting user experiences. The archive may match and store various content, for example, images and related texts, based on the user experiences. Thereafter, the processor 110 may use images and related texts when generating the reconstructed content matching the user's intention, based on the archive including at least one input content and the first text matching the input content.

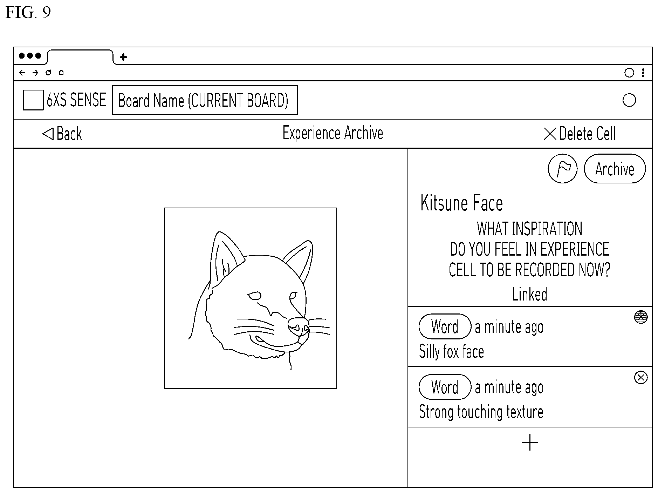

Referring to FIGS. 2, 6, and 9, the processor 110 may provide an item for registering the input image, and may register a fox image as in FIG. 9 in accordance with an item (Experience Archive → Image Archive → Upload Input Image) selected in response to an operation of the user. In this case, the processor 110 may receive the first text for the input image input by the operation of the user. For example, the processor 110 may acquire the fox image and the first text such as the silly fox face and the strong touching texture which relate to the fox image in response to the operation of the user.

As illustrated in FIG. 1, the processor 110 may match and display the input image and the first text. In this case, at least one first text may be used.

Meanwhile, the present disclosure may provide the following recommendation service in relation to the input of the first text through the learning model.

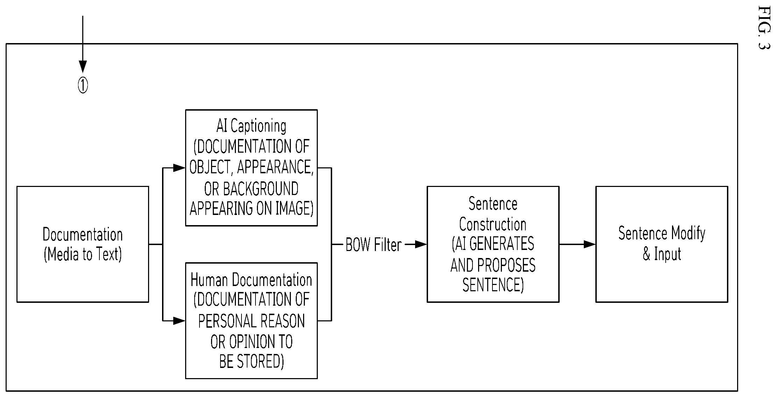

FIG. 3 may be a view for describing a Documentation (Media to Text) process in FIG. 2 in more detail. Referring to FIG. 3, when the processor 110 receives the first text matching the input content, the processor 110 may generate and output a recommended text including a sentence or a word including an object, an appearance, and a background through captioning of the input image using a second learning model. In this case, the processor 110 may acquire the recommended text by searching for the bag of words after captioning the input image.

For example, the second learning model may include a first image captioning learning model that generates the text for describing each object and situation within the input image when the input image is input.

In addition, the second learning model may include a second image captioning learning model that generates the text for describing a type, a characteristic, or the like which is a word category of different attributes of the input when the input image is input.

Therefore, referring to FIG. 3, the processor 110 may provide the user with at least one recommended text when the input image is input to the image captioning learning model. In addition, the processor 110 may provide a user interface for re-editing the first text for the input image on a screen which displays the text input by the user for setting the initial concept and at least one recommended text or a recommended word.

In more detail, the processor 110 may filter the text input by the user and the recommended texts for setting the initial concept, as a base text for generating the first text through a bow filter. The processor 110 may input the filtered base texts to a sentence generation learning model (sentence construction), and may generate a suggested first text for the input image to be provided to the user.

The user may correct and edit the provided first text to generate a final first text for the input image.

That is, the processor 110 may receive the final text determined or corrected based on the input test by the user and the recommended text, as the first text. That is, the recommended text may be selected as it is or may be corrected in response to the operation of the user so that the recommended text is reflected as the first text.

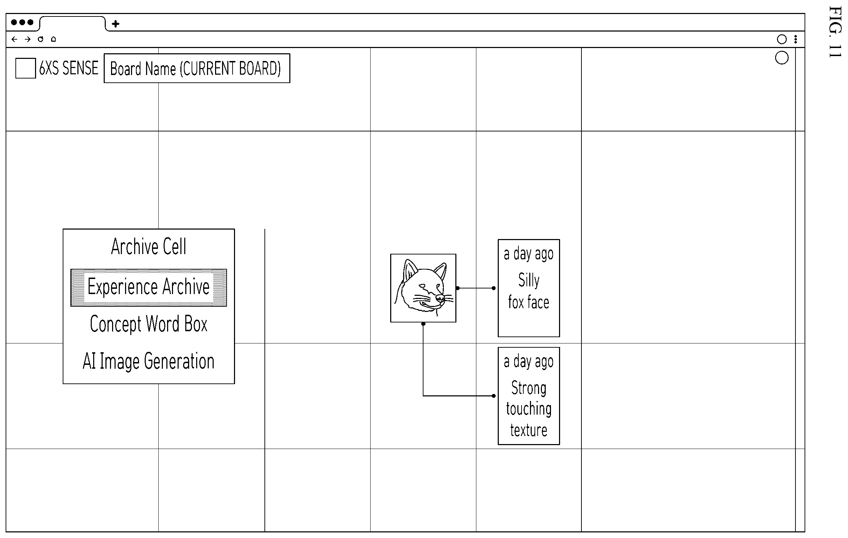

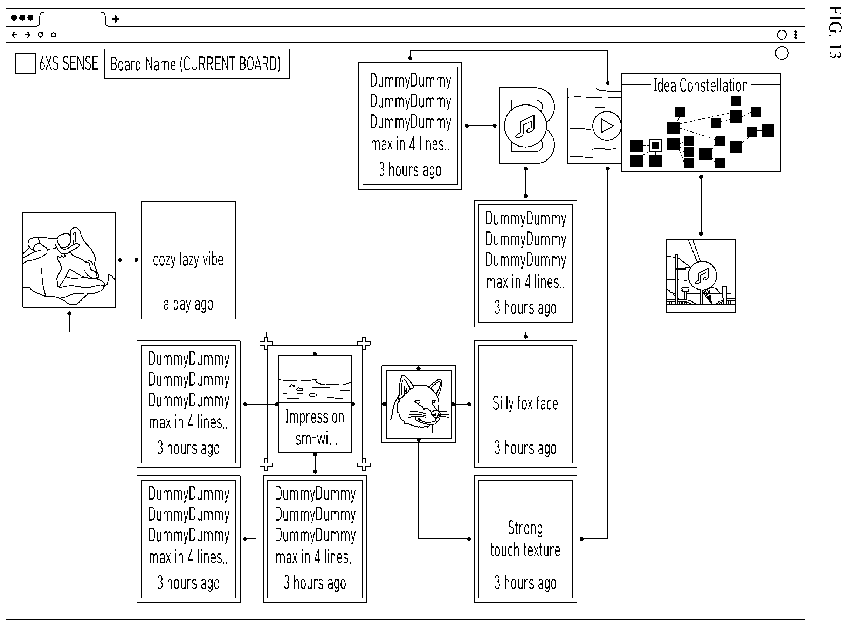

Referring to FIGS. 11 to 13, the processor 110 may repeatedly receive various forms of the input images which may be references for a concept that a user wants to express, and the first text matching the input images. In addition, the processor 110 may connect the input image, the first text, the first text of another input image in response to the user input, based on a relationship therebetween, and may store a result in the archive. In this way, a state where a plurality of the input images and the first text are connected may be expressed in a tree structure as illustrated in FIG. 13. When storing the archive including the input image and the first text in a memory 140, the processor 110 may store the archive by reflecting this connection relationship.

Thereafter, the processor 110 may generate the bag of words, based on the first text. Through the above-described repeated processes, a plurality of the first text may be used, and the processor 110 may generate the bag of words, based on the plurality of first texts. In this case, the bag of words may be formed by reflecting characteristics of each user, based on the first texts input by the user. In addition, the processor 110 may recommend the first texts for generating the bag of words by learning the input images.

The processor 110 may determine caption data by using a second text included in the bag of words and a predetermined sentence structure. In this case, the caption data may mean a sentence expressing what content the image includes. The second text may mean a text included in the bag of words formed based on the plurality of first texts.

The processor 110 may cause an output unit (not illustrated) to output a predetermined sentence structure including a plurality of blanks matching the word category for describing the input image and a connecting word between the plurality of blanks. The word category may mean those in which the words to be input to the blanks are classified by attributes.

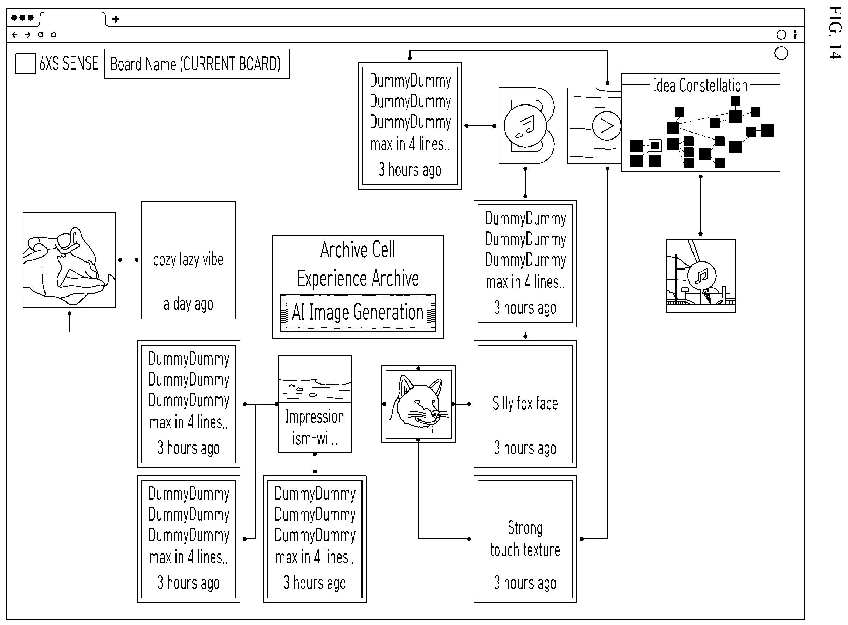

Referring to FIGS. 14 to 2, when the processor 110 executes a process for generating the reconstructed image, the processor 110 may generate the caption data, for example, the sentence, for generating a desired reconstructed image, and may generate and provide the reconstructed image through the first learning model, based on the generated caption data. In order to assist generation of the caption data, the processor 110 may provide items for each word category for generating a base sentence to generate the reconstructed image, at least one first text matching each item and/or the word included in the first text, and may determine the caption data by determining the second text in accordance with the first text of each item (AI Image Generation → Sentence Builder → Word Selection) selected in response to the operation of the user or the word belonging to the first text.

In this case, the processor 110 may provide a recommended word which may be input to each of blanks corresponding to the items of each of the plurality of word categories, based on the first text. For this purpose, the processor 110 may provide the first text and/or the recommended word included in the first text by considering a relationship with the input image in the first text and whether the first text coincides with each word category.

For example, the processor 110 may provide a predetermined sentence structure such as A 'TYPE' of 'BASE' that is 'DETAIL' in the 'STYLE'. In this case, the 'TYPE', 'BASE', 'DETAIL', and 'STYLE' may be implemented as blank items that prompt inputs of words. Here, the words may mean phrases and clauses composed of multiple words, which may be words included in the first text input by the user for the input image and/or the first text recommended from the input image. Each blank may display the first text matching each word category required for describing the image, such as the type, base, detail, and style.

In addition, the processor 110 may additionally provide a reference word representing attributes of each blank item. In detail, the processor 110 may recommend the reference words representing the attributes of each word category item which is frequently used but not input to the archive by the user for each item of the type, base, detail, and style. In addition, the processor 110 may provide the image matching the reference word when recommending the reference word so that the user may intuitively understand the meaning of the reference word.

In the caption data, the above-described "A, of, that is, and in the" is a connecting word between multiple blanks, may include an articles, a particle, or the like for completing the sentence when the word is input to the blank. That is, the connecting word in the present disclosure may mean a word for completing the sentence when the word is input to the blank in a predetermined sentence structure.

Specifically, the processor 110 in the present disclosure may input a high-quality sentence helpful for training the learning model, to prevent a case where users input sentences which do not satisfy reference values in terms of a format, a content and the like, or a case where users input sentences which do not accurately reflect intentions of the users since the users do not know which sentences to input. That is, the processor 110 guides the users how to combine the sentences by including any words.

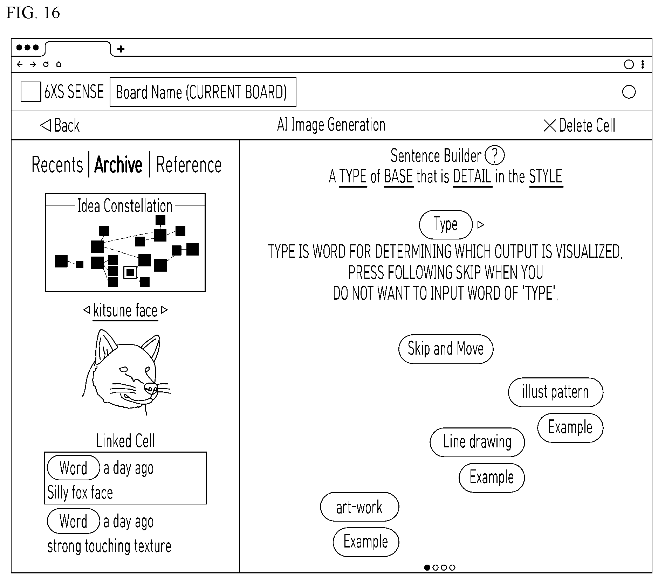

Referring to FIGS. 16 to 2, the processor 110 may display a predetermined sentence structure, such as A TYPE of BASE that is DETAIL in the STYLE, through an output unit, may recommend and display at least one word matching the word category of each blank. In this manner, the users may input these.

For example, when the input image is a fox and the predetermined sentence structure such as A 'TYPE' of 'BASE' that is 'DETAIL' in the 'STYLE' is output to a screen, the processor 110 may provide a plurality of recommended words which may be input to the blanks of the 'TYPE', 'BASE', 'DETAIL' and 'STYLE' in relation to the fox by searching for the bag of words. The processor 110 may input words of oil-color painting, a fox, sitting in a field at sunrise, an realism art which are selected by the user corresponding to the 'TYPE', 'BASE', 'DETAIL' and 'STYLE' in the plurality of recommended words so that the words correspond to each blank. Based on the input words, the processor 110 may determine caption data such as "A oil-color painting of a fox that is sitting in a field at sunrise in the style of realism art.

That is, the processor 110 may provide a word belonging to the first text corresponding to the item of the TYPE from a previously recorded archive, or the recommended word for the input image, so that the user may select the word corresponding to the item of the TYPE. In addition, the processor 110 may provide a reference word typically used for the item of the TYPE, and a related reference image (Related Reference) for understanding an expression meaning of the reference word, so that the user may select the word corresponding to the item of the TYPE.

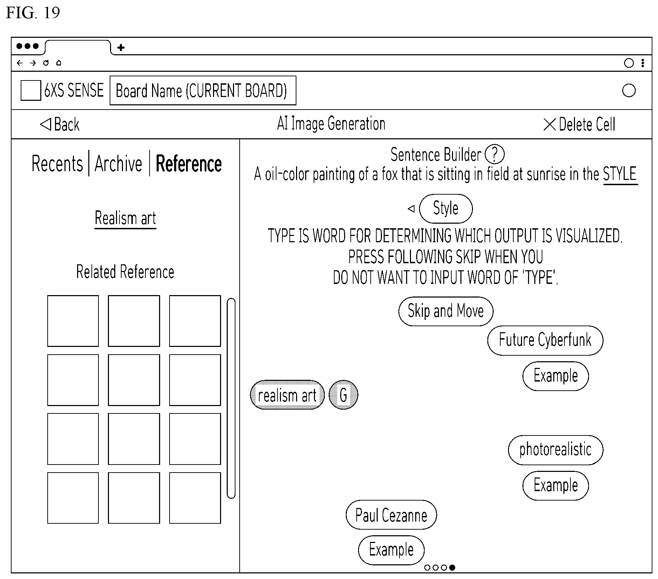

In addition, referring to FIGS. 19 to 20, the processor 110 may provide the word belonging to the first text corresponding to the item of the STYLE from the previously recorded archive, or the recommended word for the input image, so that the user may select the word corresponding to the item of the STYLE. In addition, the processor 110 may provide the reference word typically used for the item of the STYLE, and the related reference image (Related Reference) for understanding the expression meaning of the reference word, so that the user may select the word corresponding to the item of the STYLE. In this case, a time required for generating the reconstructed image may depend on each word that designates the STYLE. Therefore, when the processor 110 determines the word corresponding to the STYLE, the processor 110 may guide an expected image generation time according to the word in advance, based on the number of generating images.

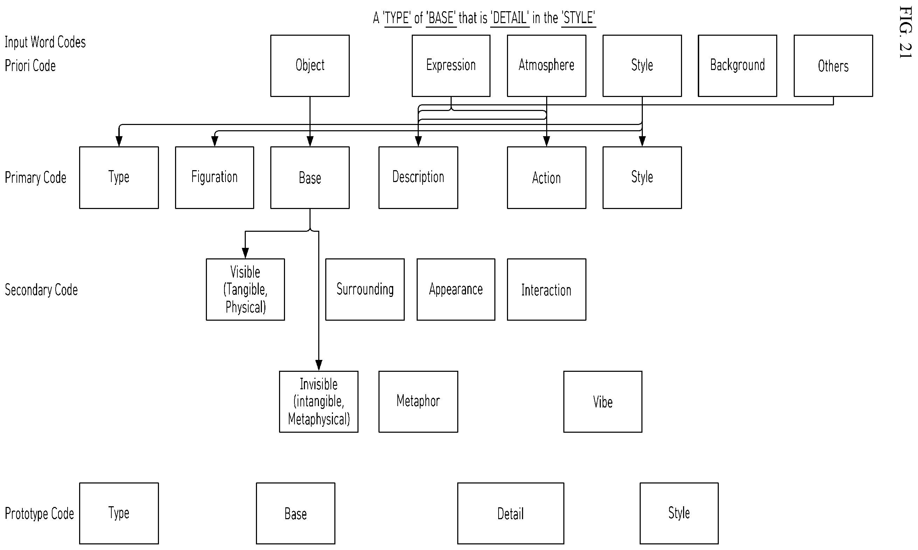

Referring to FIG. 2 and FIG. 21, the category of the bag of words may include a type, a figuration, a base, a description, an action, and a style.

In this case, the type, figuration, base, description, action, and style may be derived from a code of an object, an expression, an atmosphere, a style, a background, and others.

The type may be a finally shown output (for example, a pattern, an illustration, a manipulation, or a photograph), and the figuration may be simplified, shaped, abstracted, or the like.

In addition, the base may be a core subject, and the description may mean describing the subject.

In addition, the action may be an action taken by the subject.

A first code of the above-described type, figuration, base, description, action, and style may be further classified and applied to a second code in detail, and prototype codes of the type, base, detail, and style may be acquired.

These prototype codes may be a word category that guide an input to the blanks of the predetermined sentence structure. The word category and the category of the bag of words are not limited to those described above, and may be changed depending on needs of an operator.

Meanwhile, the processor 110 in the present disclosure may perform the following process to improve sentence completeness of the determined caption data.

As an example, the processor 110 in the present disclosure includes a grammar check function, and may perform a grammar check on the determined caption data. The processor 110 may check the sentence in which a grammatical error may occur due to only the input word searched from the bag of words and the previously determined connecting word, and may correct the connecting word or may correct a format of the word input to the blank so that a combination of the words input to the blanks may be correctly formed. For example, the processor 110 may correct parts of speech of the words input to the blanks to fit the sentence structure, or may correct (for example, add, delete, or change) the connecting word.

As another example, when presenting the recommended word searched from the bag of words, the processor 110 in the present disclosure may correct the parts of speech of the recommended word, and may present a result by considering the sentence structure between the blank to which the recommended word is input and the preset connecting word. For example, the processor 110 may correct the parts of speech of A, may add the connecting words such as articles and particles to A, and may present the connecting words as the recommended words, depending on the connecting word adjacent to the blank to which the word A is input.

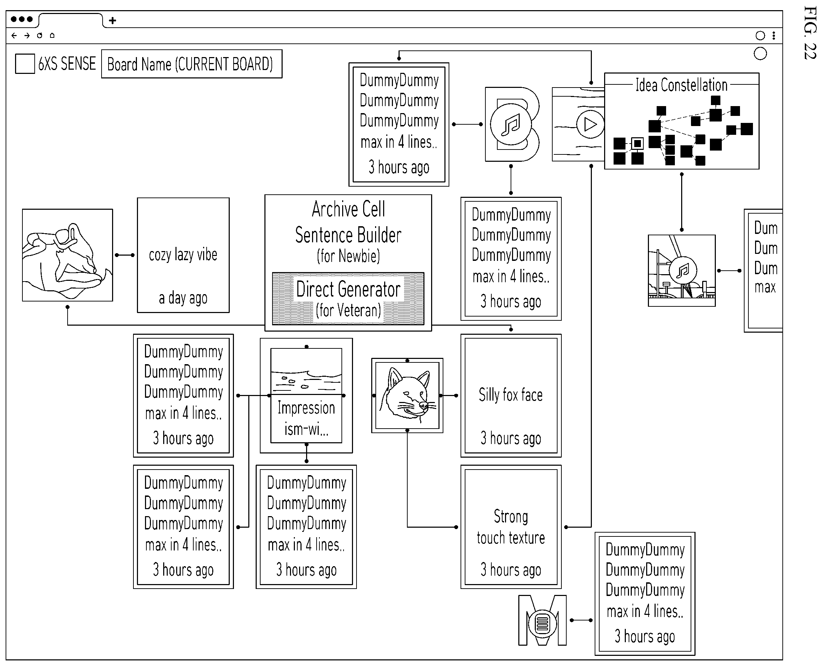

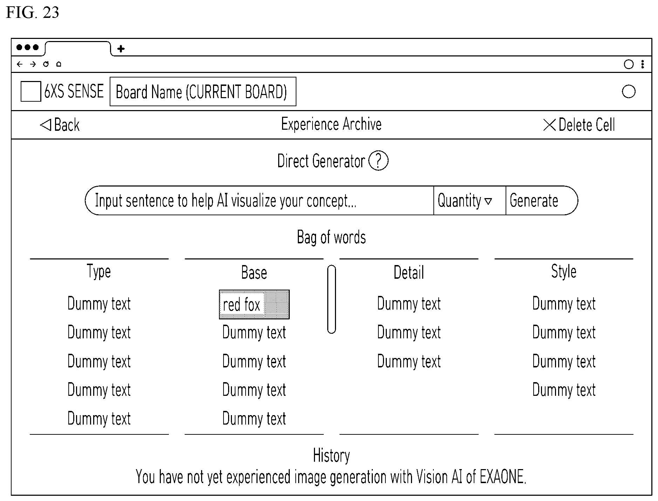

The processor 110 may provide a tool to enable the user to freely input the sentence and generate the caption data, based on the bag of words. For example, referring to FIGS. 22 and 23, the processor 110 may enable the user to select the word in the bag of words since a Direct Generator item is selected. The grammar check function described above may also be applied to this process.

The processor 110 may input the caption data to the learning model to generate at least one reconstructed content corresponding to the first text. The reconstructed content may be the reconstructed image. In this case, the processor 110 may generate the reconstructed content corresponding to the first text by using a multimodal AI that performs learning by simultaneously inputting various modalities.

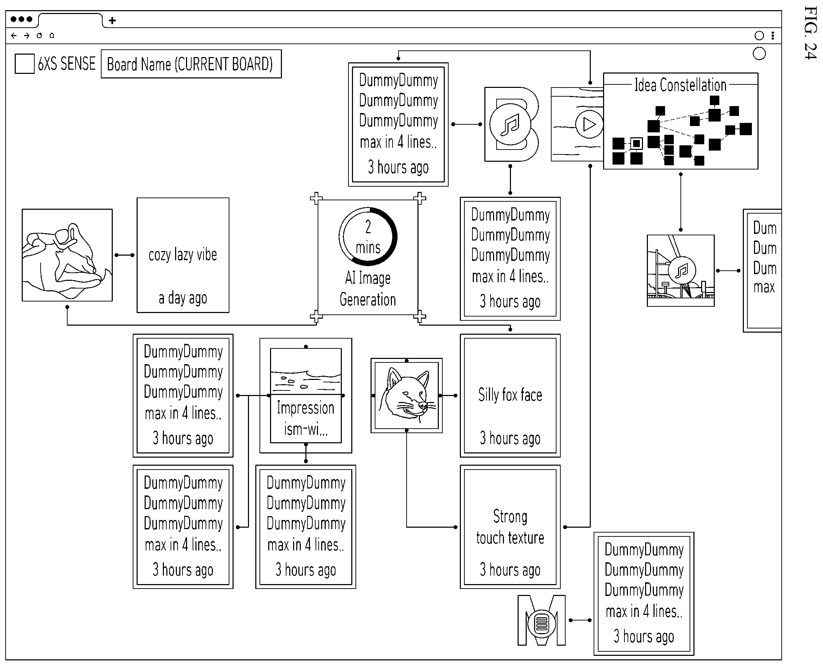

Referring to FIGS. 24 to 26, the processor 110 may generate 16 reconstructed images, based on the caption data of "A painting of a fox sitting in a field at sunrise in the style of realism art." generated through a caption data generation process for generating the reconstructed image.

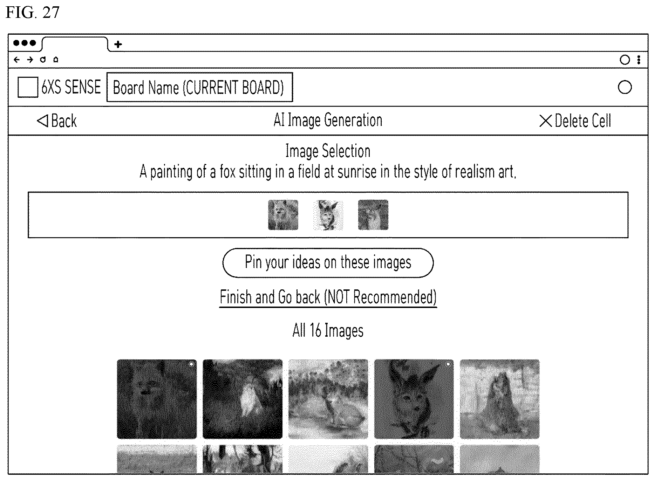

As illustrated in FIG. 27, the processor 110 may receive a feedback on the reconstructed image selected by the user from at least one reconstructed image. The processor 110 may store the feedback on the reconstructed image as the input image-first text in the archive, and may use the feedback to be helpful when the reconstructed image is generated again.

The above-described feedback process may be performed before connecting and outputting the at least one reconstructed content and the input content (to be described later) after generating the at least one reconstructed content. Without being limited thereto, feedback process may also be performed after connecting and outputting the at least one reconstructed content and the input content.

The processor 110 may additionally generate the second text of the bag of words, based on the archive including the first text in which the reconstructed image is used as the input image, based on the feedback. That is, the processor 110 may receive the feedback on the reconstructed image, may receive the text and the pinpoint by using the reconstructed image as the feedback, may generate the input image-first text by using the reconstructed image, and may store the input image-first text in the archive. In addition, the processor 110 may provide a process of generating the caption data, based on the additionally stored input image-first text, and may repeat the process of generating the reconstructed image that gradually further matches the intention of the user.

For this purpose, the processor 110 may additionally generate the second text in accordance with the category of the bag of words, based on the feedback.

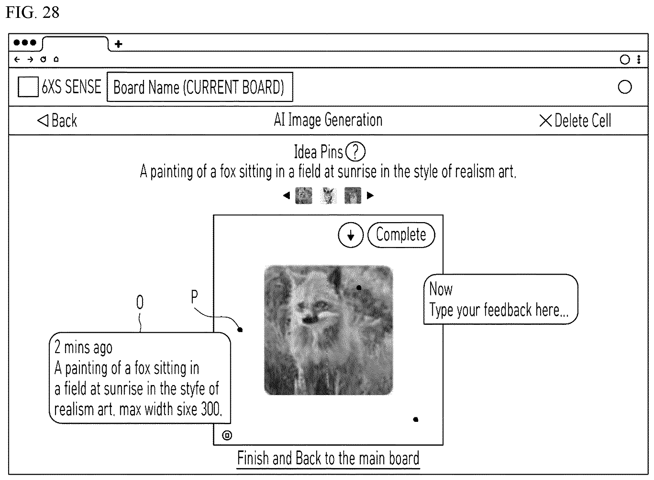

Referring to FIG. 28, when receiving the feedback, the processor 110 may receive a feedback opinion O on the reconstructed image and a pinpoint P in the reconstructed image that matches the feedback opinion in response to an operation of the user.

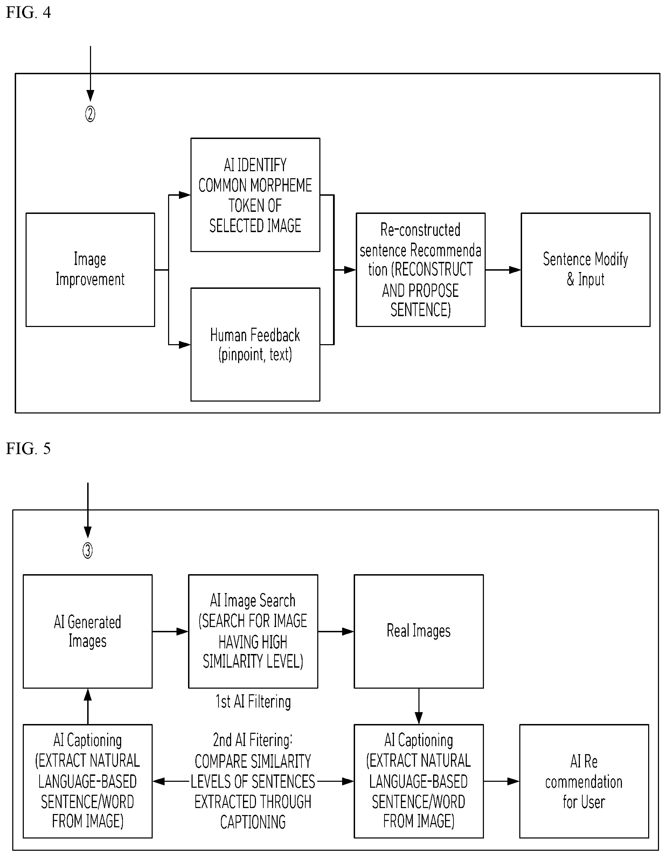

Meanwhile, referring to FIG. 4, when receiving the feedback, the processor 110 may input the reconstructed image to the learning model to identify a common morpheme token related to the reconstructed image, may reconstruct the sentence of the caption data by using the identified common morpheme token, and may output the reconstructed sentence through an output unit. In this case, the processor 110 may correct the reconstructed sentence in response to an operation of the user.

Referring to FIG. 2, the processor 110 may generate an archive (first Image Archiving to Nth Image Archiving) of each reconstructed image generated as the reconstructed image is initially generated and the feedback is repeatedly performed. Multiple archives generated in this way may be stored in the memory 140, and may be used to generate the image that further matches the intention of the user.

Referring to FIG. 5, the processor 110 may search for and provide real images having a similarity level higher than a preset reference value, based on at least one reconstructed image.

In addition, referring to FIG. 5, the processor 110 may extract the caption data including the sentence or the word through each captioning of at least one reconstructed image, and may recommend new caption data by comparing the extracted caption data with the real images.

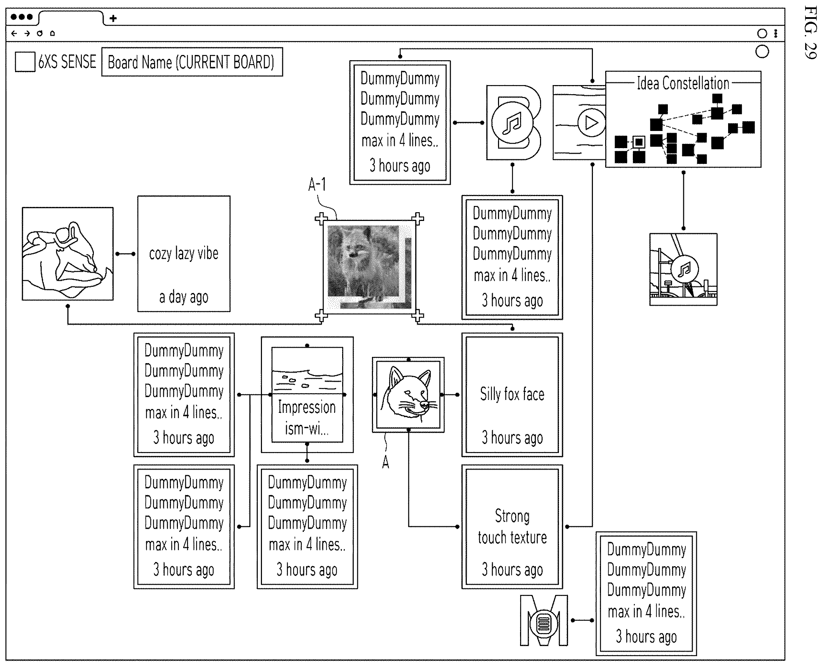

As illustrated in FIG. 29, the processor 110 may connect and output at least one reconstructed content A-1 and input content A.

The processor 110 in the present disclosure may include one or more cores, and may include a processor for data analysis and deep learning, such as a central processing unit of a computing device, a general purpose graphics processing unit, and a tensor processing unit. The processor 110 may read a computer program stored in the memory 140 to perform data processing for machine learning according to the present disclosure. According to the present disclosure, the processor 110 may perform operations for learning a neural network. The processor 110 may perform calculations for learning a neural network, such as processing input data for learning in deep learning, extracting features from the input data, calculating errors, and updating weights of the neural network using backpropagation. Although not illustrated, the processor 110 in the present disclosure may input noise training data including clean label data and label noise data to a neural network model to select label noise, and may train a classifier by mixing the label noise data and the clean label data.

The neural network model may be a deep neural network. In the present disclosure, a neural network, a network function, and a neural network may be used with the same meaning. A deep neural network (DNN) and a deep neural network may mean a neural network including multiple hidden layers in addition to an input layer and an output layer. When the deep neural network is used, latent structures of data may be identified. That is, latent structures of a photo, a text, a video, a voice, or a music (for example, what object is in the photo, what the content and emotion of the text are, what the content and emotion of the voice are, and the like) may be identified. The deep neural network may include a convolutional neural network (CNN), a recurrent neural network (RNN), a restricted Boltzmann machine (RBM), a deep belief network (DBN), a Q network, a U network, a Siamese network, and the like.

The convolutional neural network is a type of the deep neural network including the neural network including a convolutional layer. The convolutional neural network is a type of multilayer perceptrons designed to use minimal preprocessing. The CNN may include one or more convolutional layers and artificial neural network layers combined therewith. The CNN may additionally use a weight and a pooling layer. Owing to this structure, the CNN may sufficiently use two-dimensional structured input data. The convolutional neural network may be used to recognize objects in images. The convolutional neural network may process image data by representing the image data as a matrix having dimensions. For example, in a case of image data encoded in RGB (red-green-blue), the image data may be represented as a two-dimensional matrix by each color of the R, G, and B (for example, in a case of a two-dimensional image). That is, a color value of each pixel of the image data may be a component of the matrix, and a size of the matrix may be the same as a size of the image. Therefore, the image data may be represented as three two-dimensional matrices (three-dimensional data array).

In the convolutional neural network, a convolutional process (input and output of convolutional layer) may be performed by multiplying matrix components at each location of a convolutional filter and the image while moving the convolutional filter. The convolutional filter may include a matrix in a form of n*n. The convolutional filter may generally include a filter in a fixed form which is smaller than the total number of pixels of the image. That is, when an m*m image is input to the convolutional layer (for example, a convolutional layer in which a size of the convolutional filter is n*n), a matrix representing n*n pixels including each pixel of the image may be multiplication between the convolutional filter and the components (that is, multiplication between respective components of the matrix). Since the multiplication with the convolutional filter is used, a component matching the convolutional filter may be extracted from the image. For example, a 3*3 convolutional filter for extracting upper and lower straight line components from the image may be configured as [[,1,], [,1,], [,1,]]. When the 3*3 convolutional filter for extracting the upper and lower straight line components from the image is applied to the input image, the upper and lower straight line components matching the convolutional filter may be extracted and output from the image. In the convolutional layer, the convolutional filter may be applied to each matrix (that is, each color of to the R, G, and B in a case of an R, G, and B coded image) for each channel representing the image. In the convolutional layer, features matching the convolutional filter may be extracted from the input image by applying the convolutional filter to the input image. A filter value (that is, a value of each component of the matrix) of the convolutional filter may be updated by backpropagation during a learning process of the convolutional neural network.

The output of the convolutional layer may be connected to a subsampling layer to simplify the output of the convolutional layer. In this manner, a memory usage amount and a computational amount may be reduced. For example, when the output of the convolutional layer is input to a pooling layer having a 2*2 max pooling filter, the image may be compressed by outputting a maximum value included in each patch for each 2*2 patch from each pixel of the image. The above-described pooling may be a method for outputting a minimum value from the patch or outputting an average value of the patch, and any pooling method may be included in the present disclosure.

The convolutional neural network may include one or more convolutional layers and sub-sampling layers. The convolutional neural network may extract features from the image by repeatedly performing the convolutional process and the sub-sampling process (for example, the above-described max pooling). Through the repeated convolutional process and sub-sampling process, the neural network may extract global features of the image.

The output of the convolutional layer or the subsampling layer may be input to a fully connected layer. The fully connected layer is a layer in which all neurons in one layer are connected to all neurons in the neighboring layer. The fully connected layer may mean a structure in which all nodes in each layer are connected to all nodes in other layers in the neural network.

At least one of a CPU, a GPGPU, and a TPU of the processor 110 may process learning of a network function. For example, the CPU together with the GPGPU may process the learning of the network function and classification of data using the network function. In addition, in one embodiment in the present disclosure, the processors of a plurality of computing devices may be used together to process the learning of the network function and the classification of data using the network function. In addition, a computer program executed in the computing device according to one embodiment in the present disclosure can be a program executable by the CPU, the GPGPU, or the TPU.

The memory 140 may store a computer program for providing a platform providing method, and the stored computer program may be read and executed by the processor 150. The memory 17 may store any form of information generated or determined by the processor 110 and any form of information received by the communication processor 150.

The memory 140 may store data supporting various functions of the content generation platform server 100 and a program for the operation of the processor 110, may store input/output data (for example, the input image, the first text, the reconstructed image, the second text of the bag of words, and the like), and may store multiple application programs or applications running on the content generation platform server 100, data for the operation of the content generation platform server 100, and commands. At least some of these application programs may be downloaded from an external server via wireless communication.

This memory 140 may include at least one type of storage media in memories of a flash memory type, a hard disk type, a solid state disk type, a silicon disk drive (SDD) type, a multimedia card micro type, a card type (for example, an SD or XD memory and the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an Optical disk. In addition, the memory may be a database separate from a main device but connected to the main device in a wired or wireless manner.

The communication processor 150 may include one or more components that enable communication with an external device, and for example, may include at least one of a broadcast receiving module, a wired communication module, a wireless communication module, a short-range communication module, and a location information module.

Although not illustrated, the content generation platform server 100 in the present disclosure may further include an output unit and an input unit.

The output unit may display a user interface (UI) for providing a label noise selection result, a learning result, or the like. The output unit may output any form of information generated or determined by the processor 110 and any form of information received by the communication processor 150.

The output unit may include at least one of a liquid crystal display (LCD), a thin film transistor-liquid crystal display (TFT LCD), an organic light-emitting diode (OLED), a flexible display, and a three-dimensional display (3D display). Some of these display modules may be configured as a transparent or light-transmitting type through which the outside is visible. This type may be referred to as a transparent display module, and a representative example of the transparent display module is a Transparent OLED (TOLED).

The input unit may receive information input by the user. The input unit may include a key and/or a button on the user interface, or a physical key and/or a physical button for receiving the information input by the user. A computer program for controlling a display according to the embodiments in the present disclosure may be executed in response to the user input through the input unit.

FIG. 3 is a flowchart for describing a platform providing method in the present disclosure.

Hereinafter, a method for providing a platform in which the content generation platform server 100 provides a learning model trained to output at least one reconstructed image corresponding to a text when the content generation platform server 100 receives the text from a user terminal will described.

The processor 110 of the content generation platform server 100 may receive input content and a first text matching the input content from the user terminal through a content generation module 120 (Step 310). The input content may be an input image.

In addition, the input content may be a reconstructed image generated by a previous user through a first learning model, and the first text may be a text matching the reconstructed image.

In Step 31, the processor 110 may generate a recommended text including a sentence or a word including an object, an appearance, a background, and the like through captioning of the input image using a second learning model of the content generation module 120, and may transmit and output the generated recommended text to the user terminal.

In addition, through the content generation module 120, the processor 110 may receive a final text determined or corrected based on a text input by the previous user or/and a recommended text output based on the input image from an image captioning model, as the first text.

Next, the processor 110 may generate a bag of words, based on the first text through the content generation module 120 (S320).

In detail, the processor 110 may classify words included in the first text (here, the words mean words forming the first text including a phrase and a clause) into each word category, and may provide a recommended word for each word category.

Next, the processor 110 may determine caption data by using the second text included in the bag of words and a predetermined sentence structure through the content generation module 120 (S330).

In this case, through an output unit (not illustrated), the processor 110 may output a predetermined sentence structure including a plurality of blanks and connecting words between the plurality of blanks, which match the word category for describing the input image through the image captioning model of the content generation module 120.

The processor 110 may provide a recommended word which can be input to each of the plurality of blanks, and may provide the recommended word by considering a relationship with the input image and whether the recommended word coincides with the word category.

In detail, the server 100 may provide the recommended word for the first text and the recommended word for the input image to the user terminal to set a category for each word item of caption data of the predetermined sentence structure, and based on the recommended words, may receive the second text determined for each word item category from the user terminal in response to the user input. In this manner, the second text of the caption data may be determined.

The processor 110 may automatically set the determined second text, the connecting word, and the particle to determine the text for the caption data. Next, the processor 110 may input the text of the caption data to the first learning model through the content generation module 120, and may generate at least one reconstructed content corresponding to the text indicated by the caption data (S340).

Next, the processor 110 may provide information to the user terminal through the communication processor 150 to connect and output at least one reconstructed content and the input content based on a caption data input process of generating the reconstructed content through the content generation module 120 (S350).

In addition, the processor 110 may control the user terminal to be provided with a process of receiving the feedback on the reconstructed image selected by the user from at least one reconstructed image through the feedback processing module 130.

When the user terminal provides the feedback on the reconstructed image to the feedback processing module 130, the user terminal may receive a feedback opinion on the reconstructed image and a pinpoint in the reconstructed image matching the feedback opinion in response to an operation of the user.

When receiving the feedback through the feedback processing module 130, the processor 110 receiving the feedback from the user terminal through the communication processor 150 may input the reconstructed image to the learning model to identify a common morphological token related to the reconstructed image, may reconstruct a sentence of caption data by using the identified common morphological token, and may output the reconstructed sentence through the output unit. For this purpose, the processor 110 may read out a third learning model (not illustrated) which is a morphological analyzer trained to analyze text preprocessing and separate the text into morpheme units, from the memory 140, and may use the third learning model.

The processor 110 may correct the reconstructed sentence through the feedback processing module 130 in response to the operation of the user.

Next, the processor 110 may additionally generate the second text by updating the bag of words, based on the feedback of the reconstructed image through the feedback processing module 130.

Next, the processor 110 may reconstruct the sentence of the caption data, based on the feedback through the feedback processing module 130.

The processor 110 may additionally generate the second text in accordance with the word category of each item in the bag of words, based on the feedback through the feedback processing module 130.

The processor 110 may generate an archive of each reconstructed image generated as the reconstructed image is initially generated and the feedback is repeatedly performed through the content generation module 120.

The processor 110 may update the first learning model through the archive generated in this way. Since the first learning model is trained through the text according to a predetermined sentence structure of the caption data and the reconstructed image matching the sentence structure

(for example, the input image), the first learning model may be trained with a high rate of matching the predetermined sentence structure.

The processor 110 may search for and provide real images having a similarity level higher than a preset reference value, based on at least one reconstructed image through the content generation module 120.

The processor 110 may extract the caption data including a sentence or a word through captioning of at least one reconstructed image through the content generation module 120, and may recommend new caption data by comparing the extracted caption data with the real images.

Meanwhile, the above-described method according to the present disclosure may be implemented and stored as a program or an application in a medium to be executed in combination with a hardware server.

The disclosed embodiments may be implemented in a form of a recording medium storing instructions executable by a computer. The instructions may be stored in a form of program codes, and when the program codes are executed by a processor, program modules may be generated to perform operations of the disclosed embodiments. The recording medium may be implemented as a computer-readable recording medium.

The computer-readable storage medium includes all types of storage media that store instructions which can be read by a computer. For example, the computer-readable storage medium includes a Read Only Memory (ROM), a Random Access Memory (RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure can be implemented in forms different from those of the disclosed embodiments without changing the technical idea or essential features in the present disclosure. The disclosed embodiments are exemplary, and should not be construed as limitative.

### [INDUSTRIAL APPLICABILITY]

The present disclosure has industrial applicability since a method for generating user experience-based content by using a learning model is performed through processing of a server and a terminal.

## Claims

1. A content generation platform server comprising:
a memory including a first learning model trained to generate a reconstructed content, based on a text; and
a processor communicating with the memory and controlling the first learning model to output at least one reconstructed content corresponding to the text when the text is input from a user terminal,
wherein the processor receives an input content and a first text matching the input content from the user terminal, generates a bag of words, based on the first text, determines caption data by using a second text determined based on the first text included in the bag of words and a predetermined sentence structure, inputs a sentence indicated by the caption data to the first learning model, generates at least one reconstructed content corresponding to the sentence, connects the at least one reconstructed content and the input content, and outputs the at least one reconstructed content and the input content to the user terminal.

2. The content generation platform server of claim 1, wherein the memory includes a second learning model that outputs at least one text indicating an input image, and in a case where the input content is the input image, when receiving the first text matching the input content, the processor generates a recommended text including a sentence or a word including an object, an appearance, and a background through captioning of the input image using the second learning model, provides the generated recommended text to the user terminal, and receives at least one final text determined or corrected by the user, based on the recommended text, as the first text.

3. The content generation platform server of claim 1, wherein in a case where the input content is the input image, the processor provides the user terminal with a process for generating the caption data including a predetermined sentence structure forming the caption data and a word category for each item forming the sentence structure, the word category for each item includes at least one blank filled by settings of the user, and a connecting word is formed between the blanks of the word category for each item.

4. The content generation platform server of claim 3, wherein the processor provides the user terminal with a recommended word to be input to each of the plurality of blanks, and provides the recommended word by considering a relationship with the input image and whether the recommended word coincides with the word category.

5. The content generation platform server of claim 1, wherein in a case where the reconstructed content is a reconstructed image, the processor receives a feedback for the reconstructed image selected by the user from the at least one reconstructed image, from the user terminal, additionally generates the second text of the bag of words, based on the feedback, and reconstructs a sentence of the caption data, based on the feedback.

6. The content generation platform server of claim 5, wherein the processor additionally generates the second text for at least one word category of the bag of words, based on the feedback.

7. The content generation platform server of claim 5, wherein when receiving the feedback from the user terminal, the processor provides a user interface to the user terminal to receive a feedback opinion for the reconstructed image and a pinpoint in the reconstructed image matching the feedback opinion in accordance with an operation of the user.

8. The content generation platform server of claim 5, wherein the memory includes a third learning model which is a morphological analyzer trained to preprocess the text and to separate the text into a morpheme, and after receiving the feedback, the processor inputs the reconstructed image to the third learning model to determine a common morpheme token related to the reconstructed image, reconstructs a sentence of the caption data by using the determined common morpheme token, and provides the reconstructed sentence to the user terminal.

9. The content generation platform server of claim 8, wherein the user terminal corrects the reconstructed sentence in accordance with an operation of the user, and transmits the finally determined reconstructed sentence to the content generation platform server, and when receiving the finally determined reconstructed sentence, the processor inputs the finally determined reconstructed sentence to the first learning model, re-outputs the reconstructed image, and provides the reconstructed image to the user terminal.

10. The content generation platform server of claim 5, wherein the processor generates an archive of each of the reconstructed images generated as the reconstructed image is initially generated and the feedback is repeatedly performed.

11. The content generation platform server of claim 5, wherein the processor searches for real images having a similarity higher than a preset reference value, based on at least one of the reconstructed images, and provides the real images to the user terminal.

12. The content generation platform server of claim 11, wherein the processor extracts caption data including a sentence or a word through captioning of each of the at least one reconstructed image, compares the extracted caption data with the real images, and recommends new caption data.

13. A content generation flatform providing method, as a method in which a processor of a user terminal generates user experience-based content in conjunction with a content generation platform server including at least one learning model, the method comprising:
a step of determining an input image and a first text for the input image in response to an input of a user;
a step of performing image captioning on the input image and providing a recommended text including a sentence or a word for at least one category of an object, an appearances, or a background;
a step of additionally determining the first text for the input image in accordance with a user input for the recommended text;
a step of generating a bag of words, based on the determined first text;
a step of providing the user with a process for setting caption data, based on the bag of words;
a step of determining a second text of the caption data in accordance with an input of the user, and setting the caption data in accordance with the determined second text and a predetermined sentence structure; and
a step of inputting a sentence indicated by the set caption data, generating a reconstructed image through at least one learning model, and outputting the generated reconstructed image.

14. The content generation flatform providing method of claim 13, wherein the step of providing the user with the process for setting the caption data, based on the bag of words, includes a step of outputting a process for generating the caption data including the predetermined sentence structure forming the caption data and a word category of each item forming the sentence structure.

15. The content generation flatform providing method of claim 14, wherein the word category of each item of the process for generating the caption data includes at least one blank filled by settings of the user, and a connecting word is formed between the blanks of the word category of each item.

16. The content generation flatform providing method of claim 13, further comprising:
a step of receiving a feedback for the reconstructed image selected by the user from the at least one reconstructed image output from the user; and
a step of reconstructing a sentence of the caption data, based on the feedback.

17. The content generation flatform providing method of claim 16, wherein the step of receiving the feedback for the reconstructed image includes a step of receiving a feedback opinion for the reconstructed image and a pinpoint in the reconstructed image matching the feedback opinion in accordance with an operation of the user.

18. The content generation flatform providing method of claim 16, wherein the step of reconstructing the sentence of the caption data, based on the feedback, includes a step of inputting the reconstructed image to a third learning model to determine a common morpheme token related to the reconstructed image, and reconstructing the sentence of the caption data by using the determined common morpheme token to provide the reconstructed sentence to the user terminal.

19. The content generation flatform providing method of claim 16, wherein the step of reconstructing the sentence of the caption data, based on the feedback, includes a step of additionally generating and providing the second text for at least one word category of the bag of words, based on the feedback.

20. A computer-readable recording medium storing a program that causes a computer to execute a process for the content generation platform providing method of claim 13.
